(19) European Patent Office

Europäisches Patentamt

European Patent Office

Office européen des brevets

(11) **EP 1 255 140 A1**

(12) **EUROPEAN PATENT APPLICATION**

(43) Date of publication:
**06.11.2002   Bulletin 2002/45**

(51) Int Cl.7: **G02B 6/34**, G02B 6/16,
G02F 1/01

(21) Application number: **01440120.2**

(22) Date of filing: **23.04.2001**

(84) Designated Contracting States:
**AT BE CH CY DE DK ES FI FR GB GR IE IT LI LU
MC NL PT SE TR**
Designated Extension States:
**AL LT LV MK RO SI**

(71) Applicant: **ALCATEL**
**75008 Paris (FR)**

(72) Inventors:
• **Guerin, Jean-Jacques**
  **91300 Massy (FR)**

• **Riant, Isabelle**
  **91400 Orsay (FR)**
• **Verdrager, Véronique**
  **91190 Gif-sur-Yvette (FR)**

(74) Representative: **Rausch, Gabriele, Dr. et al**
**Alcatel**
**Intellectual Property Department, Stuttgart**
**70430 Stuttgart (DE)**

(54) **Temperature compensating device for optical fibre gratings**

(57)    The present invention relates to a temperature compensating device for a prestrained fibre grating of an optical fibre, wherein said device comprises a body with a substantially cylindrical form and wherein the fibre grating is wound up on said body, whereby the dimensions of said body vary according to a change in temperature. The temperature compensating device according to the invention is athermal and allows a tuning of the grating constant of the fibre grating.

**Figure 1**

EP 1 255 140 A1

**Description**

The present invention relates to fibre gratings used in optical communication systems and more particularly, to long fibre gratings and to a temperature compensating device for such optical components.

Optical fibre gratings are realized by exposing a section of a photosensitive fiber to UltraViolet (UV) light interferences, creating a permanent change in the fibre refractive index. These fibre gratings can couple light signals from the copropagating fundamental guided mode into the contrapropagating fundamental mode (standard Bragg grating), into backward radiation modes (slanted Bragg grating) or into a forward cladding mode (long period grating). They can couple light signal from one polarization mode to another (polarization mode converter). They also can couple light signal from one mode to another when the fiber is multimodal (mode converter).

In-fiber UV photowritten Bragg grating structures form optical filters which have numerous applications in optical communications and in particular, they can be used for providing high precision wavelength selectivity in Wavelength Division Multiplexing (WDM) and Dense Wavelength Division Multiplexing (DWDM) systems. They can be used for instance for filtering, signal routing, compensating the chromatic dispersion of the transmission fibre or equalizing the gain of optical amplifiers.

The wavelength of the filter is dependent on the refractive index of the optical fibre and on the period of the grating. For proper use and high precision wavelength selectivity in optical systems, the wavelength of the filter needs to remain constant over a wide temperature range (typically from -20°C to 85°C). Unfortunately, the material of the optical fiber is affected by thermal changes. Typically, this induces for a standard Bragg grating written in a conventional telecommunication fibre, a temperature induced wavelength variation of around 10 pm/°C.

In the aforementioned WDM or DWDM systems, filters for the compensation of large band chromatic dispersion are required which implies the use of Bragg grating structures with a long length, for example with a length of one meter or even several meters. For this application, linearly chirped fibre gratings can be used to compensate the chromatic dispersion. Quadratically chirped fibre gratings can be used to compensate the slope of the chromatic dispersion. To compensate further orders of the chromatic dispersion, fibre gratings with more complex chirps will be required.

US 5,042,898 discloses compensating members which compensate the temperature dependency of a wavelength in an optical transmission path with Bragg grating filters by exerting mechanical strain which compensates the temperature sensitivity. This process makes use of the quasi-linear relationship between the thermal sensitivity and the compression or deformation sensitivity of a Bragg grating filter so that reciprocal compensation may be achieved. The fibre grating is placed under tension in a packaging based on the thermal expansion coefficient differential between two materials. When the temperature increases, the packaging contracts the fibre grating under tension and the temperature induced wavelength shift can be compensated. Recent US 6,147,341 and US 6,144,789 both propose a temperature compensating device with first and second expansion members, exerting an elongation strain in a direction parallel to the fibre grating on the fiber.

A serious problem of all the aforementioned athermal devices in the prior art is that the grating needs to be straight and the athermal device is applicable to one type of grating, i.e either standard Bragg grating or slanted Bragg gratings or long period gratings or mode converters, only, thus making this method especially unacceptable for gratings of a length which is longer than several tens of millimeters.

The underlying problem of the invention is therefore to provide a temperature compensating device for all different types of fibre gratings of an optical in order to obtain long fibre grating optical filtering devices which are not influenced by changes in temperature.

This problem is solved by a temperature compensating device with the features of claim 1.

Accordingly, a temperature compensating device for a prestrained fibre grating of an optical fibre according to the invention comprises a body with a substantially cylindrical form and wherein the fiber grating is wound up on said body, whereby the dimensions of said body vary according to a change in temperature.

The dimensions of said body vary according to the temperature and influence the entire fibre grating, making it therefore possible, that even a fibre grating with a deliberately chosen length, when wound up on a body with the respective dimensions, is advantageously influenced by the change of the dimensions of said body. When the temperature increases, the diameter of said body is reduced and leads to a mechanical deformation of the fibre grating wounded on the device. The temperature influence on the fibre grating is therefore balanced by exerting mechanical strain on the fibre grating.

In an advantageous embodiment, the temperature compensating device according to the invention has a first expansion member which comprises a material with a first coefficient of thermal expansion and a second expansion member which comprises a material with a second coefficient of thermal expansion are disposed inwardly of said body. This arrangement allows the device to balance even small differences in a change in temperature change.

Advantageously, the shape of the device is essentially circular and comprises at least two essentially symmetrically arranged parts which allow to package long optical filters of lengths higher than several decimeters. This allows to reduce the size of the device. In a further advantageous embodiment, the optical filter is wound on two half-mandrels.

Preferably, a smooth layer of silicone is arranged between the fibre grating and the device, so that the optical fibre can move homogeneously on the device.. The fibre grating has preferably a coating layer to protect the fibre grating against external damages.

It is understood that the aforementioned advantages and the features of the invention explained in the following, are not only used in the specifically described combination, but can also be used by a person skilled in the art in other combinations or alone, without exceeding the scope of the invention.

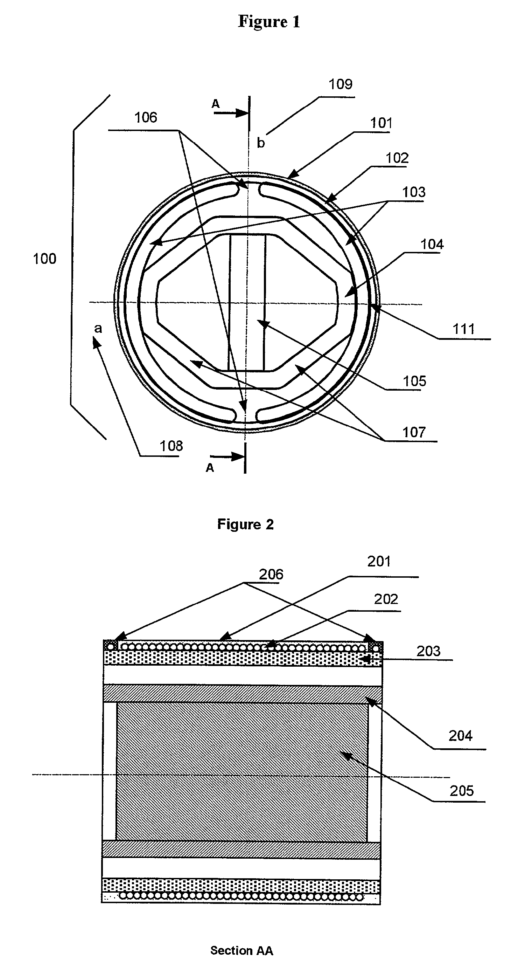

The invention is schematically explained in Figures 1 and 2 and is described in detail, where reference is made to the drawing.

Figure 1 schematically depicts a section through a temperature compensating device according to the invention.

Figure 2 schematically shows a cross-section along the line A-A of figure 1.

First of all, definitions of the terms used herein are given in order to allow a better understanding of the present invention.

Athermal packaging refers to any means capable of counterbalancing thermal effects on spectral specifications, especially on wavelengths in an optical filter.

Contact means in the context of the present application that two devices or pieces are in such a physical contact to allow the transfer of mechanical forces like for example stress, strain to the fibre grating.

In Figure 1, a temperature compensating device 100 according to the invention comprises a prestrained fibre grating 102. The fibre grating is covered by a coating layer 101 (typically a soft silicone or resin), to permit the expansion of the fibre grating with the temperature without strain on the fiber grating. The fibre grating 102 is formed by any method known by a person skilled in the art, as for example disclosed in US 4,725,110 or in EP 0 730 172 A1. The fibre grating 102 is wound with tension on a body 111, said body 111 consisting of two half-mandrels 103. The half-mandrels 103 are not in contact in the region 106 following the axe b 109. The space between the half mandrels is of few millimeters. The material of the half mandrels 103 may be silica or other. The thermal expansion of half-mandrels 103 must be close to the thermal expansion of the fibre grating. It is understood, that the body 111 may not only comprise two of the half mandrels 103, but also a multitude of such mandrels or other suitable geometric bodies, as long as they are symmetrical and their number is an even number.

Further, first expansion member 107 and second expansion member 105, called "amplification means" are fixed by any conventional means to the inside of said body 111. The first expansion member 107 has an elliptical structure and is in contact at the contact region 104 with the half-mandrels 103 following the axe a 108. The material of the elliptical first expansion member 107 has a low thermal expansion coefficient. The material of the elliptical first expansion member 107 is for example Invar® or other Zerodur® or ULE®. The thermal expansion coefficient of Invar® is typically about $10.10^{-7}$.

The second expansion member 105 is also called "string-pulling". This "string-pulling" 105 is mounted in compression inside the elliptical first expansion member 107. The "string-pulling" can be a passive mean the structure without external supplier or an active means. A passive mean is an element whose the structure changes without a external supply. A active mean is an element whose the structure changes with a external supply. In the case of a passive means the thermal expansion coefficient TEC of the string-pulling has to be considered. Typically, the value of the thermal expansion coefficient TEC is $200.10^{-7}$. In the case of an active means the thermal expansion coefficient TEC is not the determining factor. The active means is for example a piezoelectric actuator or other.

In the following, the function of the temperature compensating device according to the invention is explained for the alternatives "passive" and "active" string pulling 105.

1. Passive string-pulling 105:

If the temperature increases, the length of the "string-pulling" 105 following the axis b 109 increases. In this case the length of the ellipsoid first expansion coefficient 107 following the axis a 108 is shortened. The "string-pulling" 105 will expand considerably more than the ellipsoid first expansion coefficient 107 due to the differential thermal expansion coefficient. The small axis 109 (b) elongates and the large axis 108 (a) of the ellipsoid first expansion coefficient 107 contracts and the two half-mandrels 103 will approach each other in the region 106. The fibre grating 102 that has been previously placed under traction around the two half-mandrels 103 is compressed. The same applies vice versa for a decrease in temperature.

2. Active string pulling 105 (piezoelectric actuator):

In this case the string-pulling 105 is the piezoelectric actuator. By changing the applied voltage on the piezoelectric actuator, the length of the piezoelectric actuator, and therefore the length of the string-pulling 105 changes, varying the distance in the region 106 between the two half-mandrels 103. This causes a variation in traction on the fibre grating 102 wound on the two half-mandrels 103 and thus induces a variation of the wavelength of the fibre grating 102. The packaging, i.e. the whole setup of the temperature compensating device 100 according to the invention allows to tune the spectral specifications of the fibre grating 103, especially the wavelength. The material of the piezoelectric actuator can be appropriately chosen to make the packaging tuneable and athermal. The nominal diameter of the packaging can be around 60 mm. A smaller diameter can be used depending on the bending loss of the optical fiber.

Figure 2 shows a cross-sectional view of the temperature compensating device 200 along the line A-A of figure 1. The fibre grating 202 is wound on the half mandrels 203 in jointed turn and has a smooth coating 202 (typically a soft silicone or other), to permit the expansion of the fibre grating with the temperature without strain on the fiber grating At each extremity 206 of the fibre grating 202 it is fixed with for example glue or brass solder or other means known by a person skilled in the art. Fixed to the inside of the body, formed by the two halfinandrels 203, the hollow, circular or elliptic first expansion member 107 comprises the second expansion member 105. For further details it is referred to figure 1.

In the following, the working principle of the invention is explained in detail:

As outlined above, the principle relies on the fact that a fibre Bragg grating is influenced in its physico-optical properties by temperature and deformation.

To compensate this effect, the athermal packaging according to the invention has to satisfy the following condition:

$$d\lambda/dT \approx 0.$$

whereby $\lambda$ is the wavelength and T the temperature in °C.

The typical value of the thermal sensitivity of a Bragg grating filter is typically:

$$d\lambda/dT = 10 \text{ pm/}°\text{C.}$$

The typical value of the deformation sensitivity of a Bragg grating filter is typically:

$$d\lambda/d\varepsilon = 1.2 \text{ pm/}\mu_{def}.$$

wherein $d\varepsilon$ is the variation of the strain and $\mu_{def}$ is $\Delta L / L$ in $10^{-6}$

The thermal derivation of a Bragg grating filter in an optical fibre can be compensated by a mechanical deformation exerted by the packaging according to the present invention according to the following equation:

$$d\varepsilon/dT = -8.3\mu_{def}/°\text{C}$$

Considering the thermal sensitivity and the deformation sensitivity, the packaging has to have a linear differential dilatation coefficient of:

$$\alpha \approx -8.3 \times 10^{-6}/°\text{C.}$$

An another values of the thermal sensitivity and the deformation sensitivity of the Bragg grating are applicable to the athermal packaging.

**Claims**

1. Temperature compensating device (100) for a fibre grating (102) of an optical fibre, wherein said device (100) comprises a body (111) with a substantially cylindrical form and wherein the fiber grating (102) is wound up on said body (111), whereby the dimensions of said body (111) vary according to a change in temperature.

2. Temperature compensating device (100) according to claim 1, **characterized in that** a first expansion member (107) which comprises a material with a first coefficient of thermal expansion and a second expansion member (105) which comprises a material with a second coefficient of thermal expansion are disposed inwardly of said body (111).

3. Temperature compensating device (100) according to claim 1 and 2, **characterized in that** said first expansion member (107) is fixed to the inside of said body (111) forming a contact area (104).

4. Temperature compensating device (100) according to claim 2 and/or 3, **characterized in that** said first expansion member (107) has an elliptical shape.

5. Temperature compensating device (100) according to claim 3 and/or 4, **characterized in that** said first expansion member (107) is hollow.

6. Temperature compensating device (100) according to claim 5, **characterized in that** said second expansion member (105) is disposed inwardly of said first expansion member (107).

7. Temperature compensating device (100) according to claim 6, **characterized in that** said second expansion member (105) is disposed along the inner small axis of said first expansion member.

8. Temperature compensating device (100) according to any of the preceding claims, **characterized in that** said body (111) consists of n symmetrical components which are spaced apart and wherein n is an even number.

**8.** Temperature compensating device (100) according any of the preceding claims, **characterized in that** the coefficients of thermal expansion of said first and said second expansion member (105, 107) are essentially quasi-linear.

**9.** Temperature compensating device (100) according to any of the preceding claims, **characterized in that** the coefficient of thermal expansion of said first expansion member (107) is smaller than the coefficient of thermal expansion of said second expansion member (105).

**10.** Temperature compensating device (100) according to claim 9, **characterized in that** said second expansion member (105) comprises a piezoelectric material.

**11.** Temperature compensating device (100) according to claim 10, **characterized in that** the wavelength selection of said device is tuneable.

**12.** Temperature compensating device (100) according to claim 1, **characterized in that** said body (111) comprises a material which has a negative coefficient of thermal expansion.

**13.** Temperature compensating device (100) according to anyone of the preceding claims, **characterized in that** a layer of silicone is disposed between the fiber grating (102) and said body (111).

**14.** Temperature compensating device (100) according to anyone of the preceding claims, **characterized in that** the fiber grating (102) has a coating layer (101).

## Figure 1

## Figure 2

Section AA

**European Patent Office**

## EUROPEAN SEARCH REPORT

Application Number

EP 01 44 0120

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 38048 A (OPTICAL PRODUCTS INC) 29 July 1999 (1999-07-29) | 1,11,12 | G02B6/34 G02B6/16 G02F1/01 |
| Y | * page 12, line 9 - line 25; figure 4 * | 8-10, 13-15 | |
| Y | DAVID WEIDMAN: "Fiber Bragg gratings enhance real-world applications" LASER FOCUS WORLD, vol. 35, no. 3, 1 March 1999 (1999-03-01), pages 99-103, XP002192420 * page 102, column 1, paragraph 2 - page 103, column 1, paragraph 3 * | 9,10,13 | |
| Y | US 6 187 700 B1 (MERKEL GREGORY A) 13 February 2001 (2001-02-13) * column 24, line 21 - line 55; figure 1 * * column 25, line 27 - line 37 * * column 26, line 51 - line 57 * | 9,10, 13-15 | |
| Y | US 5 256 237 A (MAAS STEVEN J ET AL) 26 October 1993 (1993-10-26) | 8 | TECHNICAL FIELDS SEARCHED (Int.Cl.7) |
| A | * column 3, line 50 - line 63; figure 4 * | 2-7 | G02B G02F G01H |
| Y | US 6 044 189 A (MILLER CALVIN M) 28 March 2000 (2000-03-28) | 9,10,13 | |
| A | * column 1, line 59 - column 2, line 18 * * column 4, line 30 - line 42 * | 2-7 | |

The present search report has been drawn up for all claims

| Place of search | Date of completion of the search | Examiner |
|---|---|---|
| MUNICH | 15 March 2002 | Frisch, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 255 140 A1**

## ANNEX TO THE EUROPEAN SEARCH REPORT
## ON EUROPEAN PATENT APPLICATION NO.

EP 01 44 0120

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2002

| Patent document cited in search report | | Publication date | Patent family member(s) | | Publication date |
|---|---|---|---|---|---|
| WO 9938048 | A | 29-07-1999 | US | 6314056 B1 | 06-11-2001 |
| | | | AU | 2328899 A | 09-08-1999 |
| | | | BR | 9907143 A | 24-10-2000 |
| | | | CA | 2305437 A1 | 29-07-1999 |
| | | | CN | 1288526 T | 21-03-2001 |
| | | | EP | 1049954 A1 | 08-11-2000 |
| | | | NO | 20003753 A | 21-07-2000 |
| | | | WO | 9938048 A1 | 29-07-1999 |
| US 6187700 | B1 | 13-02-2001 | US | 2001021292 A1 | 13-09-2001 |
| | | | AU | 6237399 A | 30-12-1999 |
| | | | CN | 1301240 T | 27-06-2001 |
| | | | EP | 1087915 A2 | 04-04-2001 |
| | | | WO | 9964898 A2 | 16-12-1999 |
| | | | US | 2002019393 A1 | 14-02-2002 |
| US 5256237 | A | 26-10-1993 | NONE | | |
| US 6044189 | A | 28-03-2000 | US | 5838437 A | 17-11-1998 |
| | | | US | 5892582 A | 06-04-1999 |
| | | | AU | 4758797 A | 15-05-1998 |
| | | | EP | 0932814 A1 | 04-08-1999 |
| | | | WO | 9817969 A1 | 30-04-1998 |
| | | | US | 6115122 A | 05-09-2000 |
| | | | US | 6327036 B1 | 04-12-2001 |
| | | | AU | 4820497 A | 15-05-1998 |
| | | | EP | 0934501 A1 | 11-08-1999 |
| | | | WO | 9817968 A1 | 30-04-1998 |
| | | | AU | 5385198 A | 15-07-1998 |
| | | | WO | 9827446 A2 | 25-06-1998 |

EPO FORM P0459

For more details about this annex : see Official Journal of the European Patent Office, No. 12/82

8